# FASCICULE DE BREVET EUROPEEN

(11) **EP 1 966 038 B1**
(45) Date de publication et mention de la délivrance du brevet: **08.12.2010**
(21) Numéro de dépôt: 06841907.6
(22) Date de dépôt: 12.12.2006
(51) Int. Cl.: B63B 35/79, B63H 9/06

(54) **AILE EN FORME DE CONE AVEC DES PLAGES DE VOILURE A EFFETS OPPOSES ET UNE PROPULSION CONSTANTE**
KEGELFÖRMIGER FLÜGEL MIT TRAGFLÄCHENBEREICHEN MIT ENTGEGENGESETZTEN WIRKUNGEN UND KONSTANTEM ANTRIEB
CONE-SHAPED WING WITH AIRFOIL REGIONS HAVING OPPOSITE EFFECTS AND CONSTANT PROPULSION

(30) Priorité: 26.12.2005 FR 0513308
(43) Date de publication de la demande: 10.09.2008
(73) Titulaire: Leblond, Vincent, 33000 Bordeaux (FR)
(72) Inventeur: Leblond, Vincent, 33000 Bordeaux (FR)
(74) Mandataire: Fantin, Laurent
(86) Numéro de dépôt international: PCT/FR2006/002702
(87) Numéro de publication internationale: WO 2007/080257

(56) Documents cités:
- US-A- 5 234 182
- US-A1- 2004 188 567
- US-A1- 2005 127 240
- US-B1- 6 260 803

## Description

La présente invention concerne une aile propulsive pour la traction ou la sustentation d'une charge comprenant une voilure souple reliée, à l'avant, à un bord d'attaque de forme ovale, aplati à sa base et, à l'arrière, à un bord de fuite elliptique: la voilure présentant une forme conique à axe déporté vers le bas et des plages propulsives opposées ; l'aile comporte en outre, trois ou quatre lignes de commandes réparties sur le bord d'attaque.

Des ailes propulsives de traction ou sustentation d'une charge sont actuellement utilisées pour certains sports où l'utilisateur est tracté par l'aile alors que ses pieds reposent sur une planche sur l'eau (kiteboarding), sur la neige (snowkite) ou sur roues (mountainboard). Ces ailes sont de plusieurs types :
- avec un bord d'attaque gonflable en forme d'arche et des lignes de commandes aux extrémités,
- avec une voilure aplatie et de nombreuses suspentes du type parapente.

Elles possèdent la caractéristique commune d'exercer leur traction avec une vitesse élevée perpendiculaire à la direction du vent, si bien qu'à l'arrêt la force propulsive est fugitive et qu'en mouvement l'utilisateur a le souci de manoeuvrer l'aile fréquemment, ce qui nécessite de maîtriser son équilibre, ses appuis et sa prise de carre tout en modifiant fréquemment l'orientation de l'aile. La pratique de ces sports est donc élitiste et demande un long apprentissage.

Le document US-5.234.182 décrit une voilure en forme de cône dont la base constitue un bord d'attaque et le côté opposé découpé délimite un bord de fuite.

L'aile selon l'invention engendre une traction permanente tout en étant immobile en vol quand l'utilisateur est à l'arrêt, permet les déplacements de celui-ci sans déplacer l'aile pour garder une traction conséquente et engendre un maniement de la planche ou de l'engin tracté simplifié.

D'autre part, cette aile nouvelle présente les avantages d'un réglage important de l'angle d'incidence de la plage propulsive supérieure pour une perte de puissance significative et donc une sécurité accrue pour l'utilisateur, d'un décollage et d'un atterrissage réalisables aisément sans l'aide d'un tiers, ainsi que des lignes de vol éventuellement plus courtes car l'aile ne nécessite pas de déplacements de haut en bas.

Enfin, cette aile est une alternative avantageuse au système voile-mât des voiliers de plaisance : la voilure plus importante pour une même taille de bateau, la structure allégée de la construction et la traction vers le haut engendrent une moins grande résistance de la coque sur l'eau et donc une plus grande vitesse. De même, l'aile représente une source d'économie d'énergie pour les navires de commerce à moteur.

L'invention est caractérisée en ce qu'elle comporte une voilure en forme de cône aplati à axe déporté vers le bas et donc plusieurs plages de voilure dont les résultantes des forces aérodynamiques sont opposées.

La base de cette voilure est reliée au bord d'attaque constitué de préférence, mais pas obligatoirement, d'un boudin gonflable de forme ovale avec une base rectiligne et horizontale parallèle au plus grand axe pouvant reposer au sol ou sur l'eau de manière stable. L'autre côté de la voilure constitue le bord de fuite; la voilure à cet endroit est ajourée suivant la forme d'une goutte d'eau avec la pointe orientée du côté du bord d'attaque.

Cette forme délimite ainsi une plage propulsive de voilure supérieure la plus grande, deux plages propulsives de voilure latérales de tailles intermédiaires et une plage propulsive inférieure de moindre taille.

Quatre lignes de commandes se répartissent en deux lignes de commandes dites hautes et deux lignes de commandes dites basses. Elles ont une de leurs extrémités fixée autour du bord d'attaque et l'autre reliée à un système de commandes conçu pour tenir les deux lignes de gauche écartées des deux lignes de droite et faire varier la longueur des lignes hautes par rapport à celle des lignes basses.

Depuis la position d'équilibre de l'aile au repos sur le sol ou sur l'eau, l'utilisateur tend légèrement les lignes avant de diminuer la longueur des lignes de commandes hautes par rapport à la longueur des lignes basses jusqu'à ce que l'aile décolle et s'élève jusqu'à une position de vol stable et immobile si l'utilisateur est à l'arrêt. L'aile exerce alors une traction permanente dans le sens du vent.

Un raccourcissement supplémentaire des lignes de commandes hautes fait perdre la puissance de l'aile qui reste en altitude ou descend en douceur pour se poser si l'action est poursuivie.

Une diminution de la longueur des lignes basses augmente la puissance de l'aile qui reste en altitude ou descend rapidement si l'action est poursuivie.

Une tension des lignes de gauche oriente l'aile vers la gauche par rapport au sens du vent jusqu'à une position stabilisée. L'aile exerce alors une traction permanente vers la gauche par rapport au sens du vent. Une tension des lignes de droite produit les mêmes effets sur l'aile vers la droite.

Selon des modes particuliers de réalisation, l'aile propulsive comporte l'une ou plusieurs des caractéristiques suivantes :
- l'extrémité de chaque ligne de commandes est reliée au bord d'attaque par l'intermédiaire de plusieurs suspentes,
- des lattes transversales gonflables permettent au bord d'attaque de l'aile au repos d'être toujours incliné par rapport au sol ou à l'eau de façon à façiliter le décollage,
- un arceau gonflable de forme demi-circulaire relié à la face avant du bord d'attaque suivant son petit ou son grand axe permet à l'aile de ne pas tomber avec son bord d'attaque contre le sol ou l'eau et d'être dans tous les cas positionnée du côté de sa voilure pour un décollage aisé,
- des tendeurs reliant des côtés opposés du bord d'attaque limitent la déformation de celui-ci,
- d'autres tendeurs répartis le long de la base horizontale du bord d'attaque et éloignés de celui-ci par une barre rigide raidissent le bord d'attaque et le maintiennent dans sa forme rectiligne,
- la barre de commande comprend deux guides libres en rotation qui sont traversés par les lignes de commandes gauches et droites,
- le passage des lignes de commandes au travers des guides est constitué d'un matériau suffisamment souple pour permettre le déplacement des lignes quand la barre est tournée et suffisamment résistant pour bloquer les lignes le reste du temps.

L'aile propulsive sera détaillée en regard des dessins annexés donnés à titre d'exemples représentant l'aile en situation de vol, vue depuis la même hauteur et sur lesquels:
- la figure 1 représente l'aile vue en perspective,
- la figure 2 représente l'aile vue de face,
- la figure 3 représente l'aile vue de dessus,
- la figure 4 représente l'aile vue du côté gauche, les lignes hautes étant raccourcies (et les lignes basses allongées) et l'incidence de la plage supérieure de la voilure diminuée pour permettre un relâchement de la pression de l'aile,
- la figure 5 représente l'aile vue du côté gauche en position de plus forte traction,
- la figure 6 représente l'aile vue de face, sans les suspentes ni les lignes de commandes principales, faisant apparaître les lattes transversales gonflables, l'arceau gonflable de forme demi-circulaire et les tendeurs de maintien du profil du bord d'attaque,
- la figure 7 représente l'aile vue du côté gauche représentant l'arceau gonflable,
- la figure 8 représente une barre de commandes de l'aile vue en perspective.

L'aile est toujours représentée gonflée par le vent. Sa taille peut varier énormément selon l'utilisation, de quelques mètres à plusieurs dizaines de mètres carrés.

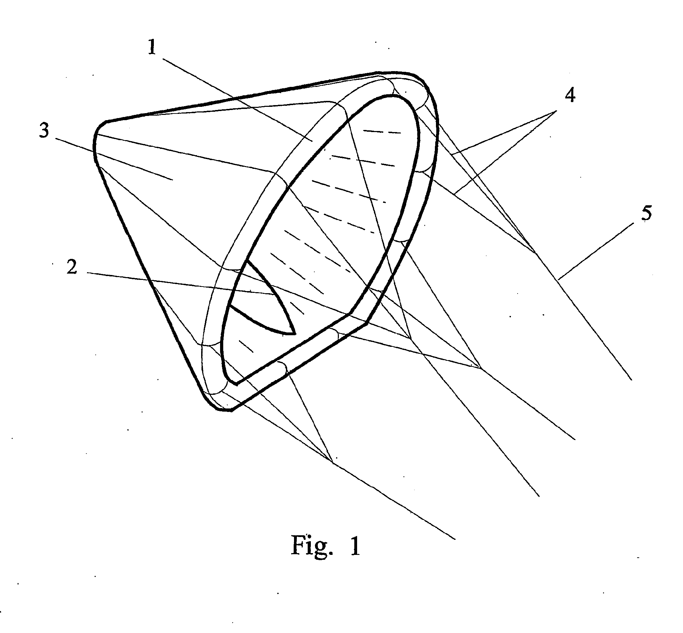

La figure 1 donne une vue globale de l'aile. Celle-ci prend la forme d'un cône pouvant être aplati et pouvant posséder un axe déporté vers le bas et comprenant plusieurs plages de voilure (3) dont les résultantes des forces aérodynamiques sont opposées. Ainsi, la plage propulsive de voilure supérieure - la plus grande - a une résultante des forces aérodynamiques orientée vers le haut dont l'effet est contredit par deux plages propulsives de voilure latérales avec leur résultante des forces aérodynamiques orientée vers l'arrière et une plage propulsive inférieure - la plus petite - avec une résultante des forces aérodynamiques orientée vers le bas.

Pour assurer la stabilité de l'aile en vol, la plus grande longueur de la voilure (3) est positionnée en partie la plus haute et atteint approximativement la valeur du petit axe du bord d'attaque (1).

Cette voilure souple et légère (3) est constituée d'un tissu synthétique peu déformable, peu imprégnable à l'eau et convenablement résistant à la déchirure et à l'usure. Elle est reliée à sa base au bord d'attaque (1) de section circulaire constante constitué, par exemple, d'une gaine gonflable avec chambre à air. Le matériau doit être souple, léger et résistant pour ne pas se déformer sous la pression de l'air intérieur et face aux pliages répétés. Ce bord d'attaque peut prendre une forme ovale avec une base rectiligne et horizontale parallèle au plus grand axe pouvant reposer au sol ou sur l'eau de manière stable.

L'autre extrémité de la voilure (3) constitue le bord de fuite (2) sous la forme d'un évidement représentant une goutte d'eau à la pointe orientée vers le bord d'attaque (1).

Pour sa confection, la voilure peut être tracée et découpée à plat suivant la forme d'un demi disque dont le rayon correspond à la plus grande longueur de la voilure; c'est à dire approximativement la grandeur du petit axe vertical du bord d'attaque (1).

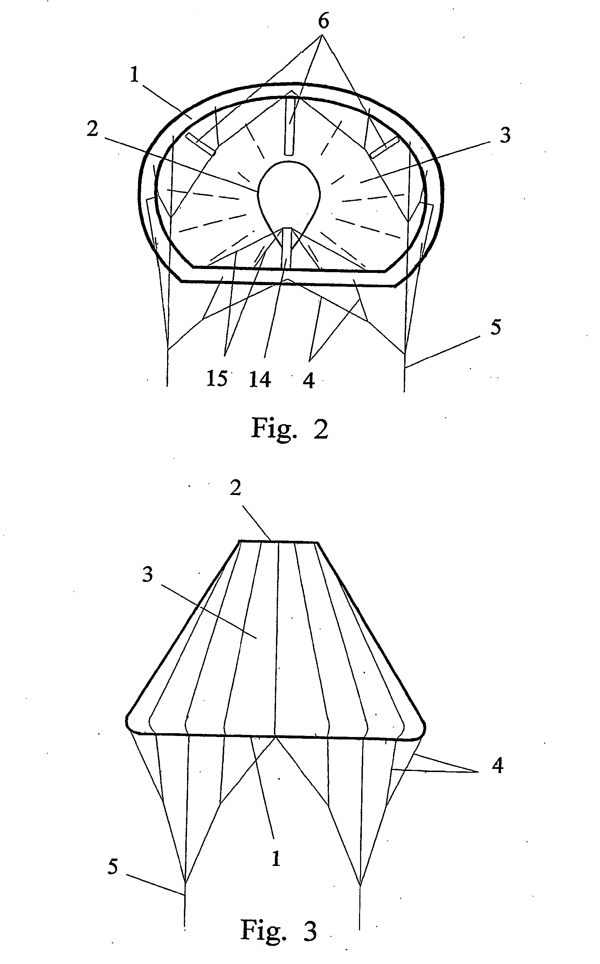

De par sa conception, la voilure en vol est systématiquement tendue par le vent. Il est cependant judicieux de placer quelques lattes transversales gonflables (6) comme indiqué en Fig. 2 le long de la voilure (3) de façon à empêcher que le bord d'attaque (1) ne repose à plat sur le sol ou sur l'eau. Les bases de ces lattes (6) sont toutes au contact du sol quand l'aile est au repos et une partie de la plage supérieure de la voilure est donc en prise au vent et facilite ainsi le décollage.

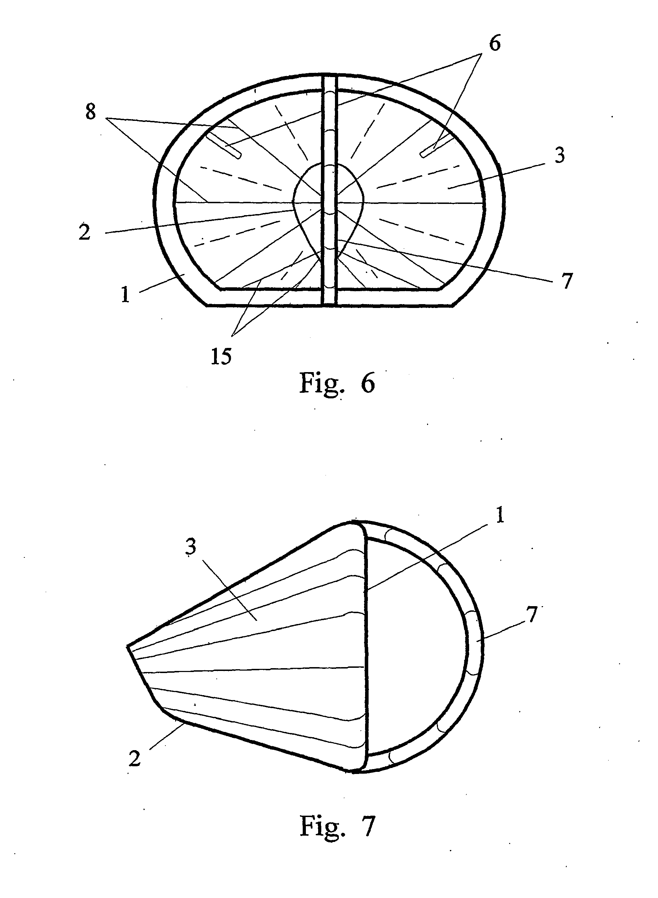

L'autre côté du bord d'attaque - face au vent - est, d'autre part, équipé d'une arche gonflable (7) disposée suivant le petit axe du bord d'attaque (1) (comme indiqué en Fig. 6 et 7) ou suivant le grand axe de manière à éviter sa mise à plat de ce côté et à forcer son positionnement du côté de la voilure (3).

Ces lattes transversales (6) et l'arche (7) peuvent être reliées au bord d'attaque (1) de façon à ne nécessiter qu'un orifice de gonflage.

D'autre part, des tendeurs (8) comme représentés en Fig. 6 assurent le maintien de la forme du bord d'attaque (1) dont ils relient des points opposés tout en étant attachés en leur centré. Ils sont au nombre de deux au minimum.

D'autres tendeurs (15) comme représentés en Fig. 2 relient la base rectiligne du bord d'attaque (1) à un même point situé sur le petit axe du bord d'attaque et maintenu éloigné par une barre rigide (14). Ce dispositif raidisseur maintient la forme rectiligne de la base du bord d'attaque (1).

Le pilotage de l'aile peut être assuré par :
- une unique ligne de commandes haute reliée au point le plus haut du bord d'attaque (1) sur son petit axe vertical est deux lignes de commandes basses reliées en des points du bord d'attaque (1) symétriques par rapport au petit axe et placés au dessous du grand axe,
- une unique ligne de commandes basse reliée au milieu de la base du bord d'attaque (1) sur son petit axe vertical et deux lignes de commandes hautes reliées en des points du bord d'attaque (1) symétriques par rapport au petit axe et placés au dessus du grand axe,
- deux lignes de commandes hautes reliées en des points du bord d'attaque (1) symétriques par rapport à son petit axe vertical, placés au dessus du grand axe et deux lignes de commandes basses reliées en des points du bord d'attaque (1) symétriques par rapport au petit axe et placés au dessous du grand axe (cas des Fig. 1 à 5).

Les points d'attaches de ces lignes (5) doivent être suffisamment éloignées des axes pour assurer la stabilité de l'aile en vol tout en permettant le pivotement de l'aile dans de bonnes conditions de précision et d'amplitude autour de ses axes.

D'autre part, dans le cas d'un bord d'attaque constitué d'un boudin gonflable ou d'une structure semi-rigide, chaque ligne est maintenue par plusieurs suspentes (4) montées coulissantes de façon à limiter la déformation du profil du bord d'attaque (1) et à garder les suspentes (4) tendues lors de la variation de l'incidence de l'aile.

L'autre extrémité des lignes est reliée à un système de commande conçu pour tenir les deux lignes de gauche écartées des deux lignes de droite et faire varier la longueur des lignes hautes par rapport à celle des lignes basses.

Dans le cas des plus petites ailes, il peut s'agir de deux poignées recueillant pour l'une les deux lignes de gauche et pour l'autre les deux lignes de droite à tenir dans chaque main.

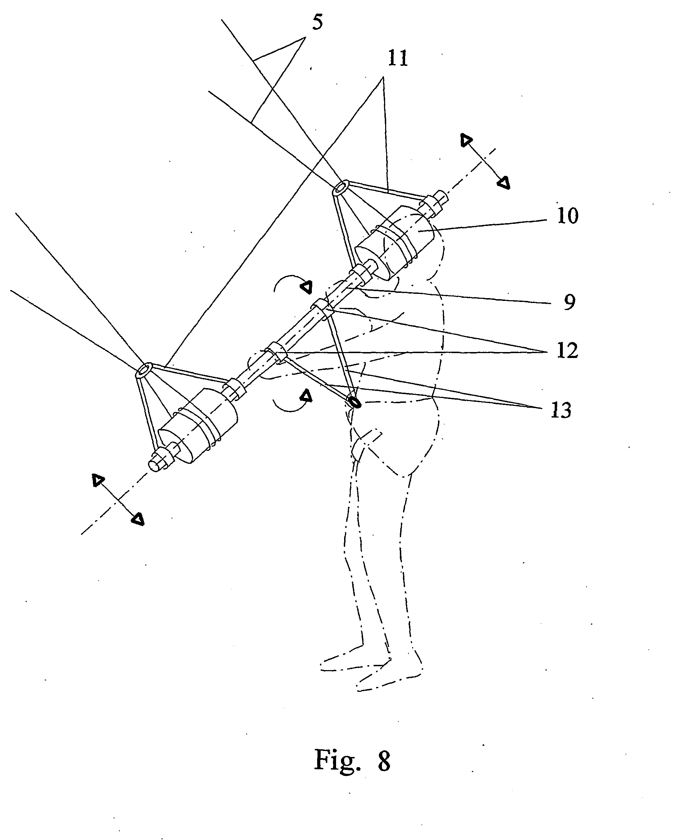

Dans le cas de plus grandes ailes, il est avantageux d'utiliser une barre (9) comme indiqué en Fig. 8 où les deux lignes de gauche sont enroulées à contresens suivant plusieurs tours sur un rouleau (10) de plus grand diamètre que la barre (9), solidaire de celle-ci et de même axe et placé à l'extrémité gauche et les deux lignes de droite disposées de la même façon au niveau de l'extrémité droite de la barre (9). Deux guides (11) sont libres en rotation autour de la barre (9) et traversés par les lignes de commandes droite et gauche. Ils assurent l'enroulement précis des lignes (5) sur les rouleaux (10) quand la barre est orientée.

La rotation de la barre (9) dans un sens allonge les lignes hautes et raccourcit les lignes basses.

Le passage des lignes de commande (5) au travers des guides (11) est constitué d'un matériau suffisamment souple pour permettre le déplacement des lignes quand la barre est tournée et suffisamment résistant pour bloquer les lignes le reste du temps. Ce dispositif maintient le bon enroulement des lignes (5) autour des rouleaux (10) quand les lignes ne sont pas en tension.

Enfin, deux attaches (12) libres en rotation autour de la barre (9) et retenues en translation permettent de relier l'ensemble au harnais de l'utilisateur par l'intermédiaire d'un cordage (13). Ainsi, une tension du côté gauche de la barre (9) rapproche les lignes de commandes gauches de l'utilisateur et oriente donc l'aile sur la gauche. La tension du côté droit développe l'effet inverse.

La longueur des lignes de commande (5) peut varier fortement de quelques mètres pour une mise en oeuvre et une utilisation facilitées à plusieurs dizaines de mètres pour profiter d'un vent plus fort et régulier qu'à la surface du sol ou de l'eau.

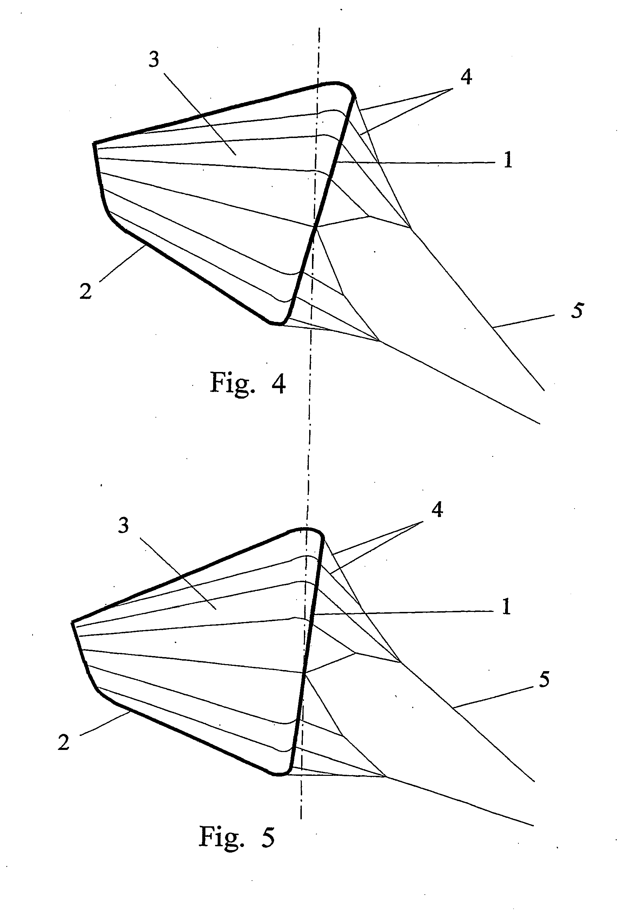

Avant le décollage, l'aile repose sur la base horizontale du bord d'attaque (1) et sur ses lattes transversales (6), face au vent. Le bord d'attaque est donc incliné et une partie de la plage supérieure de la voilure (3) est en prise au vent. L'utilisateur se déplace alors en tournant la barre (9) jusqu'à ce que les lignes de commandes hautes et basses (5) soient légèrement tendues. Dès lors, la barre est tournée pour raccourcir les lignes hautes (et allonger les lignes basses - sens de la flèche du haut de la Fig. 8) jusqu'à ce que l'aile s'élève verticalement et atteigne sa position de vol proche de celle de la Fig. 4.

Un relâchement des lignes hautes augmente l'incidence de la plage supérieure de la voilure (3). L'aile perd alors un peu d'altitude et atteint une position de vol proche de celle de la Fig. 5. L'aile est immobile si l'utilisateur est à l'arrêt et sa puissance est maximale dans le sens du vent.

Depuis cette position de forte traction, un raccourcissement des lignes hautes diminue l'incidence de la plage de voilure supérieure et fait chuter la puissance de l'aile qui reprend un peu d'altitude. Un raccourcissement supplémentaire fait alors descendre lentement l'aile qui perd alors toute puissance. Cette procédure est le gage d'une grande sécurité pour l'utilisateur en cas de coup de vent et permet également de rapprocher l'aile du sol ou de l'eau avant de relâcher amplement les lignes hautes pour faire basculer l'aile autour du grand axe du bord d'attaque (1) et la poser du côte de sa voilure (3) soutenue par les lattes transversales (6).

Une procédure d'urgence, en cas de besoin, consiste à relâcher amplement les lignes hautes à partir d'une position de vol pour faire chuter l'aile qui tombe rapidement pour reposer sur sa position stable au sol ou sur l'eau, en équilibre sur la base horizontale de son bord d'attaque (1) et ses lattes transversales (6).

En position de vol, le grand axe du bord d'attaque (1) est horizontal quand l'aile est dans l'axe du vent (représentation de la Fig. 2). La barre de commande (Fig. 8) est horizontale. Une traction du côté gauche de la barre oriente l'aile qui s'écarte de l'axe du vent vers la gauche. L'aile perd un peu d'altitude et son côté gauche est légèrement abaissé. L'aile est immobile si l'utilisateur est à l'arrêt et exerce sa puissance du côté gauche par rapport au sens du vent. Une traction du côté droit engendre les effets opposés.

Quelques exemples d'angles sont donnés à titre purement indicatif pour caractériser approximativement la position de l'aile en vol; ils dépendent, en effet, des conditions particulières de la réalisation de chaque aile et des circonstances de vol :
- angle moyen des lignes de commandes en vol par rapport au sol : 30 à 50 degrés,
- plage angulaire moyenne de déplacement de l'aile par rapport à l'axe du vent : plus ou moins 40 à 60 degrés,
- inclinaison possible du bord d'attaque de l'aile (1) en vol par rapport à la verticale, point haut du bord d'attaque vers l'avant (position des Fig. 4 et 5) : jusqu'à environ 30 à 40 degrés.

Cette aile à propulsion constante a de nombreuses applications possibles. Les plus évidentes concernent les sports impliquant un utilisateur reposant sur une planche et tracté par cette aile (kiteboarding, snowkite, mountainboard) et la navigation avec cette aile en substitution ou en secours des voiles ou du moteur.

## Revendications

1. Aile propulsive comprenant une voilure en forme de cône présentant des plages de propulsion opposées dont la base constitue un bord d'attaque (1) et le côté opposé découpé délimite un bord de fuite (2) ainsi que des lignes de commande (5) reliant la voilure à une charge à tracter ou à sustenter, **caractérisée en ce que** le bord de fuite (2) a une forme elliptique en goutte d'eau à la pointe orientée vers le bord d'attaque (1).

2. Aile propulsive selon la revendication 1 **caractérisée en ce que** le bord d'attaque (1) comprend une base rectiligne.

3. Aile propulsive selon la revendication 1 ou 2 **caractérisée en ce que** la voilure souple (3) est en forme de cône aplati, le bord d'attaque (1) prenant alors la forme ovale avec une base rectiligne.

4. Aile propulsive selon l'une quelconque des revendications précédentes **caractérisée en ce que** l'axe de la voilure (3) est déporté vers le bas.

5. Aile propulsive selon l'une quelconque des revendications précédentes **caractérisée en ce que** des lattes transversales gonflables (6) sont disposées sur une partie de la plage supérieure de la voilure (3) de telle façon que leurs bases reposent sur un même plan horizontal quand l'aile est au sol.

6. Aile propulsive selon l'une quelconque des revendications précédentes **caractérisée en ce que** des tendeurs (8) relient des points opposés du bord d'attaque (1) et sont tous attachés en leur centre.

7. Aile propulsive selon l'une quelconque des revendications précédentes **caractérisée en ce que** des tendeurs (15) relient la base rectiligne du bord d'attaque (1) à un même point situé sur le petit axe de celui-ci et maintenu éloigné par une barre rigide (14).

8. Aile propulsive selon l'une quelconque des revendications précédentes **caractérisée en ce qu'**une arche (7) est fixée sur le côté du bord d'attaque (1) opposé à la voilure suivant l'un des deux axes du bord d'attaque.

9. Aile propulsive selon l'une quelconque des revendications précédentes **caractérisée en ce qu'**elle comporte une unique ligne de commandes haute reliée au point le plus haut du bord d'attaque (1) sur son petit axe vertical et deux lignes de commandes basses reliées en des points du bord d'attaque (1) symétriques par rapport au petit axe vertical et placés au dessous du grand axe horizontal.

10. Aile propulsive selon l'une quelconque des revendications 1 à 8 **caractérisée en ce qu'**elle comporte une unique ligne de commandes basse reliée au milieu de la base du bord d'attaque (1) et deux lignes de commandes hautes reliées en des points du bord d'attaque (1) symétriques par rapport au petit axe vertical et placés au dessus du grand axe horizontal.

11. Aile propulsive selon l'une quelconque des revendications 1 à 8 **caractérisée en ce qu'**elle comporte deux lignes de commandes hautes reliées en des points du bord d'attaque (1) symétriques par rapport à son petit axe vertical, placés au dessus du grand axe horizontal et deux lignes de commandes basses reliées en des points du bord d'attaque (1) symétriques par rapport au petit axe vertical et placés au dessous du grand axe horizontal.

12. Aile propulsive selon l'une quelconque des revendications précédentes **caractérisée en ce qu'**elle comprend une barre de commande avec deux guides (11) libres en rotation autour de la barre (9) qui sont traversés par les lignes de commandes gauches et droites.

13. Aile propulsive selon la revendication 12 **caractérisée en ce que** le passage des lignes de commandes (5) au travers des guides (11) est constitué d'un matériau suffisamment souple pour permettre le déplacement des lignes quand la barre (9) est tournée et suffisamment résistant pour bloquer les lignes le reste du temps.

## Claims

1. Propulsive wing comprising a sail with a shape of cone and opposing propulsion ranges whose base constitutes a leading edge (1) and the cut-out opposide side delimits a trailing edge (2) and control lines (5) connecting the sails to a load that is to be towed or lifted, wherein the trailing edge (2) has an elliptical water droplet shape with the tip oriented toward the leading edge (1).

2. Propulsive wing according to claim 1, wherein the leading edge (1) comprises a rectilinear base.

3. Propulsive wing according to claim 1 or 2, wherein the flexible sail (3) are in the shape of a flattened cone, the leading edge (1) having an oval shape with a rectilinear base.

4. Propulsive wing according to any of the preceding claims, wherein you the axis of the sails (3) is offset downward.

5. Propulsive wing according to any the preceding claims, wherein inflatable transverse slats (6) are placed on a portion of the upper range of the sails (3) such that their bases rest on the same horizontal plane when the wing is on the ground.

6. Propulsive wing according to any of the preceding claims, wherein tightening straps (8) connect the opposing tips of the leading edge (1) and are all attached at their center.

7. Propulsive wing according to any of the preceding claims, wherein tightening straps (15) connect the rectilinear base of the leading edge (1) to the same tip that is located on the small axis of the latter and is kept separated by a rigid bar (14).

8. Propulsive wing according to any of the preceding claims, wherein an arch (7) is attached to the side of the leading edge (1) that is opposite to the sails along one the two axes of the leading edge.

9. Propulsive wing according to any of the preceding claims, wherein it comprises a single upper control line that is connected at the highest tip of the leading edge (1) on its small vertical axis and two lower control lines that are connected at the symmetrical tips of the leading edge (1) relative to the small vertical axis and placed below the large horizontal axis.

10. Propulsive wing according to any of the claims 1 to 8 wherein it comprises a single lower control line that is connected to the center of the base of the leading edge (1) and two upper control lines that are connected at symmetrical tips of the leading edge (1) relative to the small vertical axis and placed above the large horizontal axis.

11. Propulsive wing according to any of the claims 1 to 8, wherein it comprises two upper control lines that are connected at the symmetrical tips of the leading edge (1) relative to its small vertical axis and placed above the large horizontal axis, and two lower control lines that are connected at the symmetrical tips of the leading edge (1) relative to the small vertical axis and placed below the large horizontal axis.

12. Propulsive wing according to any of the preceding claims, wherein it comprises a control bar comprising two guides (11) that rotate freely around the bar (9) and through which pass the left and right control lines.

13. Propulsive wing according to claim 12, wherein the passage of the control lines (5) through the guides (11) consists of a material that is fairly flexible to allow the movement of the lines when the bar (9) is rotated and fairly flexible to allow the movement of the lines when the bar (9) is rotated and fairly resistant to lock the lines the remainder of the time.

## Patentansprüche

1. Antriebsflügel, umfassend ein kegelförmiges Tragwerk mit entgegengesetzten Antriebsbereichen, dessen Basis eine Anströmkante (1) und die abgeschnittene gegenüberliegende Seite eine Abströmkante (2) bildet, sowie Steuerleinen (5), welche das Tragwerk mit einer zu ziehenden oder zu tragenden Last verbinden, **dadurch gekennzeichnet, dass** die Abströmkante (2) eine elliptische Wassertropfenform mit der Anströmkante (1) zugewandter Spitze aufweist.

2. Antriebsflügel nach Anspruch 1, **dadurch gekennzeichnet, dass** die Anströmkante (1) eine geradlinige Basis aufweist.

3. Antriebsflügel nach Anspruch 1 oder 2, **dadurch gekennzeichnet, dass** das flexible Tragwerk (3) eine abgeflachte Kegelform aufweist, wobei die Anströmkante (1) eine ovale Form mit einer geradlinigen Basis annimmt.

4. Antriebsflügel nach einem der vorhergehenden Ansprüche, **dadurch gekennzeichnet, dass** die Achse des Tragwerks (3) nach unten versetzt ist.

5. Antriebsflügel nach einem der vorhergehenden Ansprüche, **dadurch gekennzeichnet, dass** aufblasbare Querleisten (6) an einem Teil des oberen Bereichs des Tragwerks (3) derart angeordnet sind, dass ihre Basen auf einer gleichen horizontalen Ebene aufliegen, wenn der Flügel am Boden ist.

6. Antriebsflügel nach einem der vorhergehenden Ansprüche, **dadurch gekennzeichnet, dass** Spanner (8) gegenüberliegende Punkte der Anströmkante (1) verbinden und alle in ihrer Mitte befestigt sind.

7. Antriebsflügel nach einem der vorhergehenden Ansprüche, **dadurch gekennzeichnet, dass** Spanner (15) die geradlinige Basis der Anströmkante (1) mit einem gleichen Punkt verbinden, der auf deren Nebenachse gelegen und durch eine starre Stange (5) fern gehalten wird.

8. Antriebsflügel nach einem der vorhergehenden Ansprüche, **dadurch gekennzeichnet, dass** ein Bogen (7) an der von dem Tragwerk abgewandten Seite der Anströmkante (1), entlang einer der beiden Achsen der Anströmkante befestigt ist.

9. Antriebsflügel nach einem der vorhergehenden Ansprüche, **dadurch gekennzeichnet, dass** er eine einzige obere Steuerleine, die mit dem höchsten Punkt der Anströmkante (1) an ihrer vertikalen Nebenachse verbunden ist, sowie zwei untere Steuerleinen umfasst, die an Punkten der Anströmkante (1) angeschlossen sind, welche bezüglich der vertikalen Nebenachse symmetrisch und unterhalb der horizontalen Hauptachse gelegen sind.

10. Antriebsflügel nach einem der Ansprüche 1 bis 8, **dadurch gekennzeichnet, dass** er eine einzige untere Steuerleine, die mit der Mitte der Basis der Anströmkante (1) verbunden ist, sowie zwei obere Steuerleinen umfasst, die an Punkten der Anströmkante (1) angeschlossen sind, welche bezüglich der vertikalen Nebenachse symmetrisch und oberhalb der horizontalen Hauptachse gelegen sind.

11. Antriebsflügel nach einem der Ansprüche 1 bis 8, **dadurch gekennzeichnet, dass** er zwei obere Steuerleinen, die an Punkten der Anströmkante (1) angeschlossen sind, welche bezüglich ihrer vertikalen Nebenachse symmetrisch und oberhalb der horizontalen Hauptachse gelegen sind, sowie zwei untere Steuerleinen umfasst, die an Punkten der Anströmkante (1) angeschlossen sind, welche bezüglich der vertikalen Nebenachse symmetrisch und unterhalb der horizontalen Hauptachse gelegen sind.

12. Antriebsflügel nach einem der vorhergehenden Ansprüche, **dadurch gekennzeichnet, dass** er eine Steuerstange mit zwei um die Stange (9) drehfreien Führungen (11) umfasst, die von den linken und rechten Steuerleinen durchgriffen sind.

13. Antriebsflügel nach Anspruch 12, **dadurch gekennzeichnet, dass** der Durchgang der Steuerleinen (5) durch die Führungen (11) aus einem Material besteht, das flexibel genug ist, um die Bewegung der Leinen zu ermöglichen, wenn die Stange (9) gedreht wird, und widerstandsfähig genug ist, um die Leinen den Rest der Zeit festzulegen.
